Europäisches Patentamt

European Patent Office

Office européen des brevets

(19)

(11) Veröffentlichungsnummer: **0 130 371**
**B1**

(12) # EUROPÄISCHE PATENTSCHRIFT

(45) Veröffentlichungstag der Patentschrift:
20.07.88

(21) Anmeldenummer: **84106151.8**

(22) Anmeldetag: **30.05.84**

(51) Int. Cl.⁴: **G 11 B 3/58,** C 11 D 1/82,
C 11 D 3/16

(54) Schallplatten-Pflegemittel.

(30) Priorität: **01.06.83 DE 3319794**

(43) Veröffentlichungstag der Anmeldung:
**09.01.85 Patentblatt 85/2**

(45) Bekanntmachung des Hinweises auf die Patenterteilung:
**20.07.88 Patentblatt 88/29**

(84) Benannte Vertragsstaaten:
**DE FR GB IT NL SE**

(56) Entgegenhaltungen:
**EP-A-0 008 209
DE-A-2 135 536
DE-A-2 361 229
DE-A-2 751 436
GB-A-1 076 920**

**H. Domininghans, Die Kunststoffe und ihre
Eigenschaften, VDI-Verlag 1976, Seiten 564, 565**

(73) Patentinhaber: **HOECHST AKTIENGESELLSCHAFT,
Postfach 80 03 20, D-6230 Frankfurt am Main 80
(DE)**

(72) Erfinder: **Heiskel, Elmar, Dr., Albert- Schweitzer-
Strasse 15, D-6072 Dreieich (DE)**
Erfinder: **Blank, Thomas, Schumannstrasse 13,
D-6000 Frankfurt am Main 1 (DE)**

## Beschreibung

Die Erfindung betrifft ein flüssiges Schallplatten-Pflegemittel, das ein wasserlösliches Siliconöl enthält. Das Mittel weist gleichzeitig die folgenden vier wichtigen Pflegeeigenschaften auf:

1. Ableitung elektrostatischer Aufladung von der Platte.

2. Leichte Entfernung von Fremdstoffen von der Plattenoberfläche und aus den Plattenrillen.

3. Antihafteffekt und damit Verminderung der Neuverschmutzung der Platte.

4. Reduzierung der Reibung zwischen Tonabnehmernadel und Schallplattenrille.

Zur Behandlung von Schallplatten werden auf dem Markt verschiedene Systeme angeboten, von denen hier nur die wichtigsten herausgegriffen werden sollen: Bei der Naßabspiel-Methode wird über einen auf der Platte mitlaufenden Besen eine Flüssigkeit (z. B. ein Alkohol-Wasser-Gemisch) aufgetragen, die elektrostatische Aufladung abgeleitet und der in der Rille befindliche Schmutz aufgelöst oder aufgeschlämmt. Als Nachteil ist anzusehen, daß nach der Verdunstung der Naßspiel-Flüssigkeit sich der Schmutz noch tiefer und fester in der Rille ablagert. Verschmutzungen können auf diese Weise daher von der Platte nicht entfernt werden. Durch den in der Flüssigkeit enthaltenen Alkohol können unter Umständen sowohl die Platte als auch die Klebestellen an Nadelträger angegriffen werden.

Man hat auch bereits versucht, durch Aufsetzen von Besen oder Carbonfaserbürsten auf die Platte die elektrostatische Aufladung der Platte abzuführen. Nach vorliegenden Testberichten können diese Mittel lediglich große Fusseln und Staubpartikel von der Plattenoberfläche wegfegen. Bei ihrem Gebrauch wird eine hohe statische Aufladung erzeugt. Der Feinststaub kann daher nicht entfernt werden, sondern wird in der Plattenrille nur verteilt. Darüberhinaus kann mit diesen Mitteln löslicher Schmutz nicht entfernt werden. Schließlich hat man noch versucht, durch Aufbringen von Flüssigkeiten, meist in Form von Sprays, die Platten zu reinigen. Viele der auf dem Markt erhältlichen Reinigungssprays sind zwar größtenteils zur Entfernung von Schmutz und Staub geeignet, können jedoch eine Aufladung und die damit verbundene schnelle Neuverschmutzung nicht verhindern.

Aus der französischen Patentanmeldung 1 074 871 ist eine alkoholische Lösung bzw. wäßrige Emulsion eines Alkylpolysiloxans bekannt, die auf Schallplatten als antistatisch wirkende Flüssigkeit, z. B. durch Aufsprühen, aufgetragen wird. Die eingesetzten Alkylpolysiloxane haben jedoch nur eine geringe antistatische Wirkung, und außerdem hält ihr Effekt nur kurze Zeit an.

Aus der DE-A-2 135 536 ist ein gattungsgemäßes Pflegemittel zur Reinigung von Kunststoffoberflächen bekannt, das als Aerosol eingesetzt wird. Es enthält beträchtliche Mengen an Trichlorethan als Lösungsmittel und würde daher beim direkten Auftragen, erst recht aber nach dem Verdunsten des Treibmittels, das PVC einer Schallplatte verformen.

Aus der europäischen Patentschrift 8209 ist ein Reinigungsmittel, unter anderem auch für Schallplatten bekannt, das fünf bestimmte Komponenten enthält, nämlich ein Wachs, ein flüssiges Siliconöl mit Schmieraktivität, ein oberflächen aktives Polysiloxan-Copolymer, eine fluorierte organische oberflächenaktive Verbindung und ein nicht-ionisches Tensid. Die hohen Gehalte an Wachs und Tensiden führen jedoch dazu, daß, insbesondere bei wiederholter Anwendung, die Schallplatte klebrig wird und die Abtastnadel stark verschmutzt. Weitere Nachteile bestehen darin, daß der Schmutz mit Hilfe der Abtastnadel aus den Rillen entfernt werden muß und der nicht entfernte Schmutz durch das Wachs auf der Platte festgeklebt wird.

Es bestand daher die Aufgabe, ein Mittel zu finden, das die Abtastnadel und die Rille nicht verschmutzt und mit möglichst geringen Wirkstoff-Konzentrationen auskommt.

Es wurde nun ein homogenes, einphasig-flüssiges, wachsfreies, nicht wäßriges Schallplatten-Pflegemittel gefunden, das in einem flüchtigen organischen Lösungsmittel ein wasserlösliches Siloxan-Glykol-Blockcopolymerisat Siliconöl enthält, und das dadurch gekennzeichnet ist, daß es 40 - 95 Gew.-% 1,1,2-Trichlor-1,2,2-trifluorethan (FKW 113) enthält.

Im Pflegemittel sind allenfalls kleine Mengen an Wasser (höchstens 20 Gew.-%) vorhanden. Wäßrige Emulsionen eines nicht wasserlöslichen Siliconöls enthalten zwei miteinander nicht mischbare flüssige Phasen und fallen nicht unter den Begriff "nicht wäßrig". Die Menge des Siliconöls soll so bemessen sein, daß nach der Anwendung auf der Platte ein sehr dünner Film zurückbleibt. Bewährt haben sich Gehalte von 0,0001 bis 5 Gew.-%, insbesondere 0,001 bis 0,5 %, vorzugsweise 0,01 bis 0,1 % des wasserlöslichen Siliconöls. Besonders bewährt hat sich Siliconöl LO3 der Wacker-Chemie GmbH, München.

Die im erfindungsgemäßen Mittel als Lösungsmittel enthaltenden flüchtigen organischen Verbindungen greifen in der vorhandenen Konzentration nicht das PVC der Schallplatte an.

Das erfindungsgemäße Mittel kann auch beträchtliche Teile mindestens eines aliphatischen Alkohols mit 1 bis 3 Kohlenstoffatomen enthalten. Der Anteil an aliphatischem Alkohol kann bis zu 60 %, insbesondere bis zu 40 % betragen. Besonders bevorzugt sind Alkohol-Anteile von bis zu 20 %, insbesondere 5 bis 20 % und namentlich 10 bis 20 %. Bei hohen Alkoholanteilen muß gegebenenfalls durch einen Wasserzusatz ein Anlösen der PVC-Oberfläche verhindert werden. Besonders bevorzugt als aliphatischer Alkohol ist Ethanol. Als Lösungsmittel kann besonders vorteilhaft ein Gemisch von FKW 113 und einem aliphatischen Alkohol verwendet werden.

Es ist günstig, wenn das FKW 113/Alkohol-Gemisch noch geringe Mengen Wasser enthält. Ein Wassergehalt erhöht die Verdunstungsdauer eines auf die Platte aufgetragenen Reinigungsmittels, das als Lösungsmittel FKW 113/Alkohol enthält. Der Wasseranteil darf selbstverständlich nicht so hoch sein, daß wegen der Gegenwart des mit Wasser nicht mischbaren FKW 113 eine Auftrennung in zwei flüssige Phasen erfolgt. Der Wasseranteil eines einen aliphatischen Alkohol enthaltenden erfindungsgemäßen Mittels beträgt vorzugsweise höchstens 10 Gew.-%, insbesondere höchstens 5 %. Der Wasseranteil beträgt vorzugsweise mindestens 0,3 %, insbesondere 0,4 bis 0,6 %. Es ist bevorzugt, wenn das Gewichtsverhältnis Wasser/Alkohol höchstens 0,2 beträgt. Vorzugsweise beträgt dieses Verhältnis 0,01 bis 0,1, insbesondere 0,02 bis 0,06. Im Fall von Ethanol reichen die geringen Wassergehalte des handelsüblichen Produkts (ca. 4 bis 6 % Wasser) aus.

Die erfindungsgemäße Reinigungsflüssigkeit kann direkt aus einem Flüssigkeitsbehälter auf die Platte aufgetragen werden. Wenn anschließend die noch feuchte Platte mit einem Filz- oder Samttuch abgerieben wird, wird der Schmutz aus den Rillen herausgeholt. Gleichzeitig lagert sich ein sehr dünner Film des antistatisch wirkenden Siliconöls auf der Plattenoberfläche ab. Das wasserlösliche Siliconöl vermindert gleichzeitig die Reibung zwischen der Abtastnadel und der Plattenrille.

Es ist möglich, das erfindungsgemäße Mittel auch in Form eines Sprays einzusetzen. Hierzu wird die Zubereitung in Sprühdosen abgefüllt und mit einem druckverflüssigten Aerosol-Treibmittel in Mengen von bis zu 50 Gew.-%, vorzugsweise 5 bis 35 Gew.-%, versetzt. Als Treibmittel eignen sich beispielsweise FKW 12 (Dichlor-difluormethan) oder FKW 114 [Tetrafluordichlorethan (oder Dichlortetrafluorethan). Besonders geeignet ist ein Gemisch aus FKW 114 und FKW 12. Verwendbar sind auch kleine Anteile (bis ca. 5 %) eines komprimierten Treibgases , wie $CO_2$ oder $N_2O$.

Das erfindungsgemäße Mittel enthält vorzugsweise keine weiteren nichtflüchtigen Verbindungen , wie z. B. Tenside oder Fluortenside. Es bewirkt trotz sehr geringer Gehalte an nicht flüchtigem Wirkstoff eine hervorragende Ableitung elektrostatischer Aufladungen von der Platte, eine sehr leichte Entfernung von Fremdstoffen von der Plattenober-Fläche sowie aus der Plattenrille, wegen des Antihafteffekts eine wesentliche Verringerung von Neuverschmutzungen sowie eine Reduzierung der Reibung zwischen Nadel und Plattenrille, wodurch die ungeschmälerte Benutzbarkeit der Platte erheblich verlängert wird.

Dies ist überraschend, da gemäß EP-PS-8209 die Bestandteile Wachs, Tensid und Fluortensid für eine zufriedenstellende Wirkung für unverzichtbar angesehen werden.

Die Erfindung wird durch die folgenden Beispiele näher erläutert.

**Beispiel 1**

Neue Schallplatten aus der gleichen Produktion wurden teils unbehandelt, teils nach Einsprühen mit einem Schallplattenpflegemittel mit einem Polyestersamt-Tuch 5 mal abgerieben. Anschließend wurde mit dem Meßfühler eines Feldstärken-Meßgerätes "Eltostat", der von der Platte 25 mm entfernt war, die elektrostatische Aufladung gemessen. Die Versuche wurden nach Ablauf von 36 Stunden wiederholt. Es wurden folgende Feldstärken bestimmt:

| Versuch | Mittel | Feldstärke |
|---------|--------|------------|
| a | ohne | 200 - 450 /KV/m/ |
| b | Stand d. Technik* | 0.5 - 2.5 |
| c | erfindungsgemäß | 0.5 - 1 |

\* Käufliches Marktprokukt

Das in Versuch c eingesetzte Mittel hatte folgende Zusammensetzung:

> 56 % FKW 113
> 15 % FKW 12
> 15 % FKW 114
> 0,035 % Siliconöl L 03 (Wacker)
> Rest Ethanol (96 %-ig)

In Versuch 1b wurde ein käufliches anerkanntes Mittel zur Schallplattenreinigung und -pflege eingesetzt.

**Beispiel 2**

Auf neuen Schallplatten gleicher Produktion wurde Zigarettenasche verrieben. Anschließend wurden die Schallplattenpflege mittel von Beispiel 1b und 1c aufgesprüht.

Das Mittel gemäß Beispiel 1b gab mit der Asche ein inniges schmieriges Gemisch, das praktisch nicht entfernt werden konnte. Auch nach Abreiben des Gemisches mit einem Samttuch waren Ascherückstände auf der Platte sichtbar.

Bei Einsatz des erfindungsgemäßen Mittels gemäß Beispiel 1c wurde die Asche vollständig aus den Rillen herausgelöst. Die Plattenoberfläche entsprach dem Neu-Zustand.

## Patentansprüche

1. Homogenes, einphasig-flüssiges, wachsfreies, nicht wäßriges Schallplatten-Pflegemittel, das in einem flüchtigen organischen Lösungsmittel ein wasserlösliches Siloxan-Glykol-Blockcopolymerisat (Siliconöl) enthält, dadurch gekennzeichnet, daß es 40 - 95 Gew.-% 1,1,2-Trichlor-1,2,2-trifluorethan enthält.

2. Mittel gemäß Anspruch 1, dadurch gekennzeichnet, daß es 0,0001 bis 5 Gew.-%, insbesondere 0,001 bis 0,5 Gew.-% des wasserlöslichen Siliconöls enthält.

3. Mittel gemäß Anspruch 1, dadurch gekennzeichnet, daß es als Lösungsmittel Ethanol in einer Menge von bis zu 60 Gew.-% enthält.

4. Mittel gemäß Anspruch 3, dadurch gekennzeichnet, daß es 10 bis 20 Gew.-% Ethanol enthält.

5. Mittel gemäß Anspruch 3, dadurch gekennzeichnet, daß es noch geringe Mengen Wasser enthält und das Gewichtsverhältnis Wasser/Ethanol maximal 0,2 beträgt.

6. Mittel gemäß Anspruch 1, dadurch gekennzeichnet, daß es bis zu 50 Gew.-% eines Aerosol-Treibmittels enthält.

7. Verwendung einer wachsfreien Lösung eines wasserlöslichen Siliconöls auf Basis Siloxan-Glykol-Blockcopolymerisat mit einem Gehalt von 0,0001 bis 5 Gew.-% zur Pflege von Schallplatten aus PVC, wobei das Lösungsmittel ein Gemisch von 1,1,2-Trichlor-1,2,2-trifluorethan, das 40 - 95 Gew.-% der Mischung ausmacht, und einem aliphatischen Alkohol mit 1 bis 3 Kohlenstoffatomen darstellt.

## Claims

1. A homogeneous, single-phase liquid, wax-free, non-aqueous disk care product containing a water-soluble siloxane-glycol block copolymer (silicone oil) in a volatile organic solvent, which contains 40 - 95 % by weight of 1,1,2-trichloro-1,2,2-trifluoroethane.

2. An agent as claimed in claim 1, which contains 0.0001 to 5 % by weight, in particular 0.001 to 0.5. % by weight, of the water-soluble silicone oil.

3. An agent as claimed in claim 1, which contains ethanol as the solvent in an amount of up to 60 % by weight.

4. An agent as claimed in claim 3, which contains 10 to 20 % by weight of ethanol.

5. An agent as claimed in claim 3, which also contains a small amount of water and wherein the weight ratio water/ethanol is a maximum of 0.2.

6. An agent as claimed in claim 1, which contains up to 50 % by weight of an aerosol propellant.

7. Use of a wax-free solution containing 0.0001 to 5 % by weight of a watersoluble silicone oil based on a siloxane-glycol block copolymer, for the care of disks made of PVC, the solvent being a mixture of 1,1,2-trichloro-1,2,2-trifluoroethane, which constitutes 40 - 95 % by weight of the mixture, and an aliphatic alcohol having 1 to 3 carbon atoms.

## Revendications

1. Produit homogène liquide à une seule phase, dépourvu de cire et non aqueux, pour l'entretien des disques d'enregistrement sonore, produit qui renferme, dans un solvant organique volatil, un copolymère séquencé siloxane/glycol (huile de silicone) soluble dans l'eau, et qui est caractérisé en ce qu'il contient de 40 à 95 % en poids de trichloro-1,1,2 trifluoro-1,2,2 éthane.

2. Produit selon la revendication 1 caractérisé en ce qu'il contient de 0,0001 - 5 % en poids, plus particulièrement de 0,001 - 0,5 % en poids, de l'huile de silicone soluble dans l'eau.

3. Produit selon la revendication 1 caractérisé en ce qu'il contient, comme solvant, de l'éthanol en une quantité pouvant aller jusqu'à 60 % en poids.

4. Produit selon la revendication 3 caractérisé en ce qu'il contient de 10 à 20 % en poids d'éthanol.

5. Produit selon la revendication 3 caractérisé en ce qu'il contient en outre de petites quantités d'eau et en ce que le rapport pondéral de l'eau à l'éthanol est d'au plus 0,2.

6. Produit selon la revendication 1 caractérisé en ce qu'il contient au plus 50 % en poids d'un propulseur d'aérosol.

7. Application, pour l'entretien de disques en poly-(chlorure de vinyle) d'une solution sans cire qui contient, en une concentration de 0,0001 à 5 % en poids, une huile de silicone hydrosoluble à base d'un copolymère séquencé siloxane/glycol, le solvant de cette solution étant un mélange de trichloro-1,1,2 trifluoro-1,2,2 éthane, en une quantité représentant de 40 à 95 % en poids du mélange, et d'un alcool aliphatique contenant de 1 à 3 atomes de carbone.